# EUROPEAN PATENT SPECIFICATION

(11) **EP 1 245 892 B1**
(45) Date of publication and mention of the grant of the patent: **31.05.2006**
(21) Application number: 01500198.5
(22) Date of filing: 25.07.2001
(51) Int. Cl.: F16L 33/207, F16L 13/14

(54) **Pipe connection system and method for mounting such a system**
Rohrverbindungssystem und Montageverfahren für ein solches System
Système de raccordement pour tuyauterie et procédé de montage d'un tel système

(30) Priority: 27.03.2001 ES 200100709
(43) Date of publication of application: 02.10.2002
(73) Proprietor: SANEPER, S.A., 01170 Legutiano (Araba) (ES)
(72) Inventor: Diaz Moreno, Jesus, 48100 Laukariz (ES); Gonzales Dominguez, Agustin, 01007 Vitoria (ES)
(74) Representative: Urteaga Simarro, José Antonio

(56) References cited:
- DE-A- 19 856 999
- DE-A- 19 925 571

## Description

### Purpose of the invention

This invention relates to an assembly process for a gasket, in particular a pre-assembly gasket, for application in the field of pipe connections.

In this field, the existence is known of units composed of a stainless steel outer bushing and a brass nipple on which the bushing is housed, which provide a cylindrical cavity or gap between both parts to receive the end of a pipe, in particular multi-layer plastic pipes with an aluminium core, cross-linked polyethylene pipes, polybutylene pipes, etc.

These nipples have a base on which one end of the bushing rests, the pipe to be connected is inserted into the intermediate cavity or gap and the bushing is later joined or fixed to the nipple by known means, which are not the object of this specification.

The two components, bushing and nipple, are produced independently and are offered on the market either separately or with the inclusion of a pre-assembly gasket that provides a previous connection of both items.

Several gaskets of this type are known on the market, with the immense majority of them having very particular geometries or shapes that require them to be assembled, which is usually complicated and costly and does not always give effective results.

One known solution is that of DE 19856999 A1, where a torus-shaped gasket lies in the mentioned position, between the nipple and the bushing. The gasket, being torus-shaped, rests without any deformations, therefore offering sealing characteristics that could be improved.

One object of this invention is to provide a gasket for connections of this type, which is extraordinarily simple as regards its geometric conception.

Another object of the invention is to provide a gasket that has proven effectiveness in its specific function.

Another object of the invention is to provide a gasket that is very economical.

Another object of the invention is to provide a gasket whose assembly in the connection as a whole is fast and simple to perform.

In order to achieve these objectives, the invention claims the provision of a conventional type gasket, which is flat and has, for example, a rectangular cross section, which is housed in the space between both parts, with one of its ends received in a slot in the nipple, adjacent to its base, and with its other end supported or resting on the interior end of the bushing, which for this purpose is rounded.

This end of the bushing is supported directly on the base of the nipple, which can be nickel plated in order to prevent the corrosive effects of the galvanic couple derived from the bimetallic contact between the steel or aluminium of the bushing and the brass of the nipple.

The prior entry or insertion of the flat gasket into the space between the nipple and the outer bushing is forced, as will be explained later, and in such a way that it becomes lodged between the slot and the interior of the rounded area of the bushing. As this interior is in a position somewhat away from the slot, the gasket adopts a generally trunco-conical shape, and the internal end of the pipe will be supported or rested on its surface when it is inserted later.

In this way, the gasket exerts sufficient axial pressure to house the bushing against the nipple through its locking into the slot in the latter. Moreover, this means that the bushing, once inserted, can turn in relation to the nipple.

We can also observe that with the gasket of the invention, the bushing can move radially and is arranged in such a way that it fits perfectly against the wall of the nipple, eliminating any looseness or tolerance that might occur.

The assembly of the gasket claimed by the invention is carried out by situating the bushing over the base of the nipple, previously flanged or beaded at its inner end, so that the space between bodies is maintained. Following this the gasket is positioned at the start of the projection and with a suitable tool it is hit in order to push it to the base, until it reaches the position described, between the slot and the bushing.

The shape of the tool will be suitable for housing first one end of the annular section in the slot in the base of the nipple and then the other end of the said section over the interior of the rounded area of the bushing.

Thus, the gasket in question, as mentioned previously, becomes housed by taking on a trunco-conical geometric shape, which does not correspond to its natural flat state, so that it always maintains sufficient gripping capacity between the bushing and the nipple in order to form a joint unit, while at the same time permitting the turning of the bushing against the nipple, with which the later insertion of the tube is facilitated. This is because of the characteristics of the plastic memory of the gasket mentioned, which tends to recover its original shape.

The flat gasket is in itself conventional and might even be commercially available, a fact which is pointed out for the appropriate purposes due to its low cost and the lack of any type of technical complexity in its manufacture.

On the accompanying sheet of drawings, a half section of the invention is shown, with the nipple (1) and its base (4), with the slot (10) in which one end (7) of the gasket (6) is housed.

The outer surface of the nipple (1) is equipped with suitable means (9) to favour the leak-tightness with the pipe (11) and also maintain the necessary resistance to its possible axial movements.

The pipe (11) in this case is a multi-layer plastic pipe with an aluminium core and it is at the same time clasped by the bushing (3) on whose side surface the crimper of a radial type press acts and is responsible for carrying out the adjustment against the pipe (11) and against the nipple (1).

The inner end (5) of this bushing (3) is rounded for the seating of the end (8) of the gasket (6), as can be appreciated, and the base (4) of the nipple (1) is occupied by the slot (10).

The gasket (6) is housed by one of its ends (7) in the slot (10) and by its other end (8) in the interior of the rounded area (5) of the bushing (3), receiving the contact of the free end of the pipe (11), and being inserted into the space between the nipple and the bushing by means of a tool, not shown, designed for the purpose, which hits the gasket according to the direction (2), obviously prior to the insertion of the pipe (11).

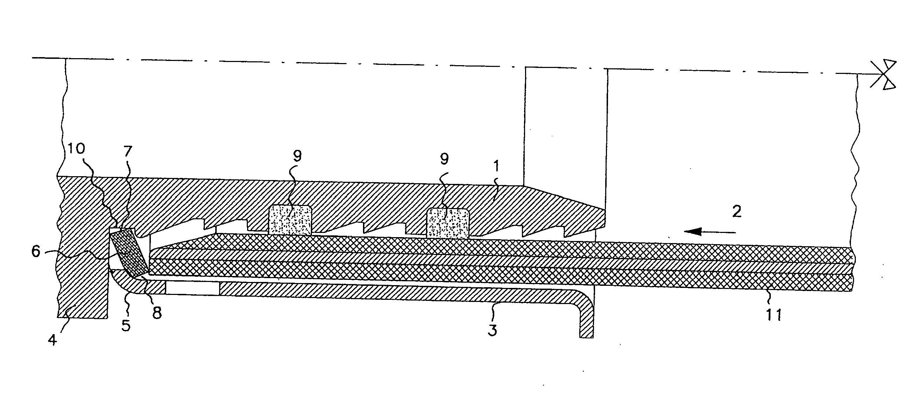

## Claims

1. Pipe connection system, particularly for connections of multi-layer pipes with an aluminium core and/or cross linked polyethylene pipes and polybutylene pipes, the connection comprising a nipple (1), a gasket (6) and a stainless steel bushing (3) between which a space is formed that can be occupied by the pipe (11), with the bushing (3) having, at its inner end, a rounded inwardly curved area (5), where the gasket (6) has a flat shape and is placeable between the base (4) of the nipple (1), the pipe (11), and the bushing (3) by housing one of its ends (7) in an annular slot (10) cut in the base (4) of the nipple, and housing the other end (8) inside the inwardly curved area (8) of the bushing (3), the pipe connection system being **characterized in that** the gasket, when mounted, adopts a susbtantially trunco-conical shape that does not correspond to its natural flat shape, therefore exerting an axial pressure on the nipple (1) and bushing (3) and maintaining sufficient gripping capacity.

2. Pipe connection system, in accordance with claim 1, **characterised in that** the inwardly curved area (5) of the bushing (3) makes contact with the front surface of the base (4) of the nipple (1), which makes both parts, nipple and bushing become a single joint unit.

3. Method for mounting a pipe connection system, **characterised in that** the outer bushing (3) is placed over the nipple (1), clasping it, until its inner end (5) comes up against the front wall of the base (4) of the said nipple, by positioning a flat gasket or seal (7) in the proximity of the free end of the nipple and hitting the said gasket with a special tool until it reaches the already mentioned front wall, so that by sliding in the space between the bushing (3) and nipple (1), the gasket makes contact at one end (8) with the interior of a rounded area at the inner end of the bushing (3) and at the other end (7) with an annular slot (10) at the base (4) of the nipple (1) in such a way that the gasket adopts a substantially trunco-conical shape.

## Patentansprüche

1. Rohrverbindungssystem, insbesondere für Verbindungen von mehrschichtigen Rohren mit einem Aluminiumkern und/oder vernetzten Polyethylen- und Polybutylen-Rohren, wobei die Verbindung einen Nippel (1), eine Dichtungsmanschette (6) und eine Buchse (3) aus rostfreiem Stahl umfasst, zwischen denen ein Zwischenraum gebildet wird, der durch das Rohr (11) eingenommen werden kann, wobei die Buchse (3) an ihrem Inneren Ende einen abgerundeten, nach innen gekrümmten Bereich (5) aufweist, bei dem die Dichtungsmanschette (6) eine flache Form besitzt und zwischen die Basis (4) des Nippelss (1), das Rohr (11) und die Buchse (3) platzierbar ist, indem eines seiner Enden (7) in einem ringförmigen Schlitz (10) eingeführt wird, der in die Basis (4) des Nippelss eingeschnitten ist, und das andere Ende (8) innerhalb des nach innen gekrümmten Bereichs (8) der Buchse (3) einnimmt, wobei das Rohrverbindungssystem **dadurch gekennzeichnet ist, dass** sich die Dichtungsmanschette in montiertem Zustand an eine vorwiegend kegelstumpfartige Form anpasst, die nicht ihrer natürlichen, flachen Form entspricht, und daher einen axialen Druck auf den Nippel (1) und die Buchse (3) ausübt, und so eine ausreichende Greiffähigkeit beibehält.

2. Rohrverbindungssystem, in Übereinstimmung mit Anspruch 1, **dadurch gekennzeichnet, dass** der nach innen gekrümmte Bereich (5) der Buchse (3) Kontakt hat mit der Frontfläche der Basis (4) des Nippels (1), wodurch beide Teile, Nippel und Buchse, zu einer einzigen gemeinsamen Einheit werden.

3. Methode zur Verlegung eines Rohrverbindungssystems, **dadurch gekennzeichnet, dass** das äußere Buchse (3) über den Nippel (1) platziert wird, indem dieser geklammert wird, bis sein inneren Ende (5) gegen die Vorderwand der Basis (4) des besagten Nippel stößt, indem eine flache Dichtungsmanschette oder Abdichtung (7) in der Nähe des freien Endes des Nippels positioniert wird, durch Bearbeiten besagter Dichtungsmanschette mit einem speziellen Werkzeug, bis sie die schon erwähnte Vorderwand erreicht, so dass durch Gleiten in den Raum zwischen dem Buchse (3) und dem Nippel (1) die Dichtungsmanschette an einem Ende (8) Kontakt mit dem Inneren eines abgerundeten Bereichts am inneren Ende der Buchse (3) hat, und am anderen Ende (7) mit einem ringförmigen Schlitz (10) an der Basis (4) des Nippels (1), und zwar auf solche Weise, dass die Dichtungsmanschette eine vorwiegend kegelstumpfartige Form annimmt.

## Revendications

1. Système de raccord de tuyau, particulièrement pour raccords de tuyaux à plusieurs couches avec un noyau en aluminium et/ou des tuyaux en polyéthylène raccordés avec des tuyaux en polybutylène, le système comprenant un raccord (1), un joint (6) et une douille en acier inoxydable (3) entre lesquels un espace est formé pour accueillir le tuyau (11), la douille (3) comprenant dans son extrémité interne une zone arrondie courbée vers l'intérieur (5), où le joint (6) a une forme plate et est placeable entre la base (4) du raccord (1), le tuyau (11) et la douille (3) en accueillant l'une de ses extrémités (7) dans une encoche annulaire découpée dans la base (4) du raccord, et accueillant l'autre extrémité (8) à l'intérieur de la zone courbe vers l'intérieur (8) de la douille (3), le système de raccord de tuyau **se caractérisant par le fait que** le joint, lorsqu'il est monté, adopte une forme de cône tronqué qui ne correspond pas à sa forme naturelle plate et exerçant donc une pression axiale sur le raccord (1) et la douille (3) et maintenant une force de serrage suffisante.

2. Système de raccord de tuyau, conformément à la revendication 1, **caractérisé par le fait que** la zone courbée vers l'intérieur (5) de la douille (3) entre en contact avec la surface avant de la base (4) du raccord (1) qui permettent aux deux parties, raccord et douille, de devenir une seule unité de joint.

3. Méthode pour monter un système de raccord de tuyau, **caractérisée par le fait que** la douille extérieure (3) est placée sur le raccord (1), et l'accroche, jusqu'à ce que son extrémité intérieure (5) vienne contre la paroi avant de la base (4) de ce raccord, en mettant en place un joint plat ou un joint (7) à proximité de l'extrémité libre du raccord et en tapant sur ce joint avec un outil spécial jusqu'à ce que celui-ci atteigne la paroi avant citée, de telle sorte qu'en le faisant glisser dans l'espace entre la douille (3) et le raccord (1), le joint soit au contact d'une extrémité (8) avec l'intérieur d'une surface arrondie à l'extrémité intérieure de la douille (3) et à l'autre extrémité (7) avec une encoche annulaire (10) à la base (4) de ce raccord (1), de telle sorte que le joint prenne une forme de cône tronqué.
